# EUROPEAN PATENT SPECIFICATION

(11) **EP 1 778 024 B1**
(45) Date of publication and mention of the grant of the patent: **21.03.2012**
(21) Application number: 05759795.7
(22) Date of filing: 04.07.2005
(51) Int. Cl.: A23J 1/14, A23L 1/20, A23L 1/308

(54) **PROCESS FOR THE PRODUCTION OF PROTEIN ENRICHED FRACTIONS FROM VEGETABLE MATERIALS**
VERFAHREN ZUR HERSTELLUNG VON PROTEINANGEREICHERTEN FRAKTIONEN AUS PFLANZLICHEM MATERIA
PROCÉDÉ DE PRÉPARATION DE FRACTIONS ENRICHIES EN PROTÉINES À PARTIR DE MATIÈRES VÉGÉTALES

(30) Priority: 13.07.2004 EP 04077032
(43) Date of publication of application: 02.05.2007
(73) Proprietor: Stichting Dienst Landbouwkundig Onderzoek, 6701 BH Wageningen (NL)
(72) Inventor: DIJKINK, Bert, Hans, NL-6721 RD Bennekom (NL); WILLEMSEN, Jeroen, Harold, Anton, NL-7325 PV Apeldoorn (NL)
(74) Representative: Swinkels, Bart Willem
(86) International application number: PCT/NL2005/000476
(87) International publication number: WO 2006/006845

(56) References cited:
- EP-A- 0 068 556
- DD-A- 236 448
- US-A- 3 895 003
- US-B1- 6 335 044
- AGUILERA J M ET AL: "Air classification and extrusion of navy bean fractions" JOURNAL OF FOOD SCIENCE, INSTITUTE OF FOOD TECHNOLOGISTS. CHICAGO, US, vol. 49, no. 2, 1984, pages 543-546, XP002217136 ISSN: 0022-1147
- TYLER R T ET AL: "Air classification of legumes. I. Separation efficiency, yield, and composition of the starch and protein fractions" CEREAL CHEMISTRY, AMERICAN ASSOCIATION OF CEREAL CHEMISTS. MINNEAPOLIS, US, vol. 58, no. 2, 1981, pages 144-148, XP002278278 ISSN: 0009-0352
- DATABASE WPI Section Ch, Week 197910 Derwent Publications Ltd., London, GB; Class D13, AN 1979-18776B XP002312694 & JP 54 011258 A (NISSHIN FLOUR MILLING CO) 27 January 1979 (1979-01-27)
- PATENT ABSTRACTS OF JAPAN vol. 0041, no. 19 (C-022), 23 August 1980 (1980-08-23) & JP 55 074771 A (NISSHIN FLOUR MILLING CO LTD), 5 June 1980 (1980-06-05)
- LETANG C ET AL: "PRODUCTION OF STARCH WITH VERY LOW PROTEIN CONTENT FROM SOFT AND HARD WHEAT FLOURS BY JET MILLING AND AIR CLASSIFICATION" CEREAL CHEMISTRY, AMERICAN ASSOCIATION OF CEREAL CHEMISTS. MINNEAPOLIS, US, vol. 79, no. 4, 2001, pages 535-543, XP001116438 ISSN: 0009-0352
- DATABASE WPI Section Ch, Week 198529 Derwent Publications Ltd., London, GB; Class D13, AN 1985-175485 XP002312695 & JP 60 105468 A (HOHNEN OIL KK) 10 June 1985 (1985-06-10)

## Description

### Summary of the invention

The present invention relates to a process for the production of protein enriched fractions from vegetable materials, preferably vegetable seed materials,

### Background of the invention

Proteins are in particular used as raw materials for the food, feed, pharmaceutical and chemical industry. As proteins are essential components in plants, they are renewable native raw materials which can be produced on an industrial scale from a wide variety of raw materials, e.g. vegetable sources such as oil seeds, legumes, grains and grasses.

Production of protein enriched fractions from vegetable sources containing high contents of starch granules such as peas and wheat is well known in the art. These processes proceed by a dry separation, in particular milling, of the raw material, followed by removing the starch granules by means of air-classification thereby concentrating the protein fraction. However, such dry separation processes are far more difficult to employ for vegetable sources containing low amounts of starch granules such as soy beans and lupine seeds.

The production of protein enriched fractions from soy beans is also already well known in the art. For example, US 3.895.003, incorporated by reference herein, discloses a process for producing protein concentrates from oil seed meals, in particular soy, cottonseed and sunflower seed meals. This process involves as a first step the necessary solvent extraction of the oil seeds thereby providing a defatted oil seed meal. Subsequently, the oil seed meal is ground to a ground oil seed meal, where after the ground oil seed meal is subjected to a first air-classification to obtain a first fines fraction and a first coarse fraction. Whereas the first coarse fraction is discarded, the first fine fraction is subjected to an ultra-fine grinding process so that 90% of the particles have a size below 20 µm. Subsequently, the ultra-ground product is subjected to a second air-classification to obtain a second fines fraction and a second coarse fraction. Whereas the second fines fraction is discarded, the second coarse fraction is washed with water or aqueous alcohol to obtain the final protein enriched product. According to the examples, the protein enrichment obtained in the second coarse fraction is about 10 - 11 %, based on the total protein content of the soy flour used as starting material, at a yield of about 41%. This process is, however, not efficient due to the required solvent extraction of the oils from the seeds prior to the milling step (cf. column 2, lines 38 - 45 of US 3.895.003).

The present inventors found, however, that due to this solvent extraction step, subsequent milling resulted into a flour having largely overlapping particle size distributions of the protein and fibre fractions. Obviously, the process according to US 3.895.003 has therefore also as disadvantage that it has a poor separation efficiency and provides a poor yield of the desired protein enriched fraction.

Other methods for producing protein enriched fractions from soy beans involve extraction steps wherein various solvents are employed. Reference is for example made to US 4.219.470, US 4.265.925 and US 5.169.660, all incorporated by reference herein. Such processes suffer for example from the disadvantage that the yields are low due to the loss of solvent-soluble protein fractions. Furthermore, a major disadvantage of the use of solvents is that drying steps are required which enhance energy consumption. Moreover, the use of solvents makes the process more complex and therefore less cost efficient. Also, protein functionalities are often negatively altered as a result from the exposure to solvents, in particular organic solvents. Additionally, the final product may contain residual solvent which is undesired for most applications, in particular for food, feed and pharmaceutical applications.

US 6.335.044 and WO 00/54608, incorporated by reference herein, disclose an extraction process for producing protein enriched fractions from lupine seeds. Lupine seeds resemble soy beans in their composition in view of protein level, crude fibre percentage and oil percentage and they are of particular importance for protein production. Lupine cultivation and the processing of lupine seeds for producing the desired protein products is therefore particularly interesting because lupines can be cultivated in regions which are not appropriate for soy beans, such as Western Europe. However, the direct use of lupine products for food applications is restricted on account of naturally occurring alkaloids providing a bitter taste to these products. The level of alkaloids present in lupine seeds is greatly dependent on the origin and the variety of the seeds. Control of the alkaloid level of lupine seeds or products derived there from is required when used in food applications and can be achieved by proper selection of the raw materials.

According to the process disclosed in US 6.335.044 and WO 00/54608, lupine seeds are dehulled and then crushed and shaped into platelet-like flakes. Next, these flakes are subjected to heat while water is largely excluded to deactivate enzymes, followed by extraction with an non-polar aprotic solvent, preferably hexane, to remove oil and lipophilic alkaloids and an aqueous acid extraction to remove water soluble constituents such as alkaloids. US 6.335.044 and WO 00/54608 do not disclose any data regarding the protein enrichment that is achieved by the process. Moreover, the disadvantage of the process is the use of solvents and therefore high processing costs. Additionally, protein enrichment is limited due to the fact that fibre material is not removed.

It is further worth noting that according to Sosulski et al., J. Am. Oil. Chem. Soc. 56, 292 - 295, 1979, milling of lupine seeds followed by air-classification did not provide a beneficial enrichment and separation of a protein-rich fraction. In addition, most of the protein was found in the dense material, that is the course fraction. It was concluded that air-classification is of no benefit to refine lupine seeds into protein-rich fractions (cf. page 294, left-hand column, second paragraph).

Finally, DE A 19.912.037 discloses a method for treating and processing lupine seeds, containing alkaloids, oil and proteins, to recover products by targeted fractionation. The method comprises de-oiling the crushed seeds by immersion in a solvent, then treatment of the residue with acid to remove acid-soluble components, particularly (I). The seeds are crushed and/or formed into small disk-shaped flakes, using a cooled flaking roller, after preliminary breakage of the optionally dehulled seeds. The flakes are heated indirectly to eliminate most of the water and after removal of the oil, the acid-solubles are removed by aqueous extraction to leave a raffinate of reduced alkaloid content and an aqueous extract.

### Summary of the invention

The present invention provides a method for the production of a protein enriched fraction from a vegetable material, wherein the vegetable material comprises a total fat content of 0.1 to 22.0 % by dry weight of the total vegetable material and a total starch content of 0.05 to 20 % by dry weight of the total vegetable material, said method comprising the steps of subjecting the vegetable material to (a) a milling process to obtain a vegetable flour and (b) subjecting the vegetable flour to a separation step to obtain the protein enriched fraction, wherein the vegetable material has a specific surface area of the less than 3500 cm²/g.

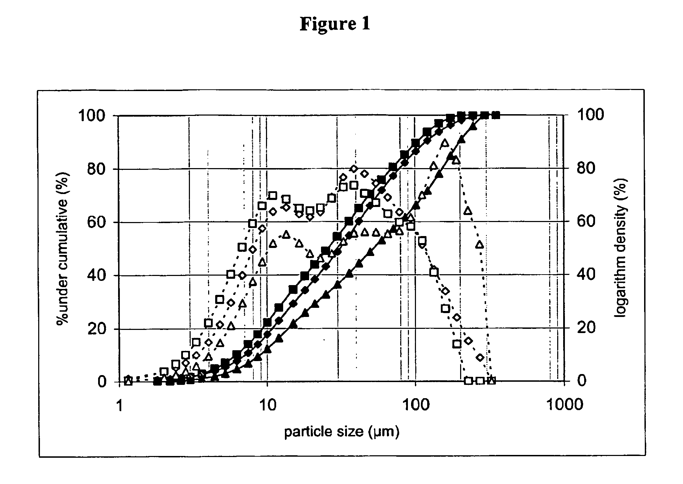

### Brief description of Figure 1

Figure 1 shows the particle size distribution of lupine meal after milling. Closed markers indicate the cumulative distribution. Open markers indicate the logarithm distribution density. Δ jet mill toasted lupine, □ ultra rotor toasted lupine, 0 ultra rotor untoasted lupine.

### Detailed description of the invention

The present invention relates to a method for the production of protein enriched fractions from vegetable material, in particular from vegetable seed material, wherein the vegetable material is subjected to a milling step wherein a vegetable flour, in particular a vegetable seed flour, is obtained, which is subsequently subjected to a separation step to obtain the protein enriched fraction.

An important advantage of the present invention is that, in contrast to the prior art processes, a solvent extraction step is not necessary, even if vegetable materials having a relatively high fat content and a relatively low starch content are processed. However, it will be apparent to the person skilled in the art that a solvent extraction step may be conducted.

According to the invention, it is preferred that the separation step comprises an air classification process. Such processes are well known in the art and is for example disclosed in US 3.985.003.

It is additionally preferred according to the present invention that the total protein content of the vegetable material is at least 20 % by dry weight, preferably at least 30 % by dry weight, more preferably at least 40 % by dry weight of the total vegetable material.

It is also preferred that the total moisture content of the vegetable material is 0.5 to 16.0 %, based on the total weight of the vegetable material. A total moisture content of lower than 0.5 % has the disadvantage that the differences in the breaking characteristics between the proteins and the fibre material during milling, required for efficient dry separation, become less obvious. A total moisture content of greater than 16.0 % has the disadvantage that the resulting flour after milling becomes too sticky (adhesion, see below) for efficient subsequent air classification.

According to a preferred embodiment of the present invention, the particle size distribution of the vegetable flour as obtained after the milling process (a) has a certain optimum. The particle size distribution is in this invention characterized by two parameters. The first parameter is d50 which is the average particle size of all particles. According to the invention, d50 is preferably at least 15 µm, preferably at least 25 µm. The second parameter to characterize the particle size distribution is the specific surface area. This area is less than 3500 cm²/g, preferably less than 3000 cm²/g. The second parameter is believed to be a better characteristic of the vegetable flour since the particle size distribution usually is bimodal.

According to a preferred embodiment of the present invention, the size reduction of the vegetable material during the milling process essentially proceeds by particle-particle collision. Size reduction by particle-particle collision has the advantage that the differences in breaking characteristics between the proteins and fibres are most efficiently used in order to obtain distinctive particles sizes of the proteins and fibres material. For that reason, the milling apparatus used in the milling process is preferably a jet mill or an ultra rotor.

A well known example of a jet mill is the Alpine® 100 AFG Jet Mill that can be used for materials which are heat sensitive and which have a Moh's hardness up to 10. Its internal classifier wheel maintains a tight particle size distribution, thus ensuring proper product quality. A well known example of an ultra rotor is the Ultra rotor Mill Jackering VI of the Altenburger Maschinenfabrik.Jäckering GmbH, Hamm, Germany. Such an ultra rotor is for example disclosed in US 4.747.550, incorporated by reference herein.

The method according to the present invention is very efficient with respect to the protein enrichment of the protein fraction from the vegetable flour obtained after said milling. According to the invention, the protein enrichment achieved with the method according to the method of the invention is at least 125 %, based on the total protein content of the vegetable seed material. The protein content of the vegetable material is usually at least 40% by dry weight, implying that the protein content of the protein enriched fraction is at least 50% by dry weight.

According to a particular preferred embodiment of the present invention, the vegetable material comprises lupine seeds. Most preferably, the vegetable material consists essentially of lupine seeds.

Furthermore, it is believed by the inventors that cold pressed oil seeds may also be a very suitable vegetable material that can be used in the process of the present invention. Consequently, according to another particular preferred embodiment of the present invention, the vegetable material comprises cold pressed seeds. Additionally, in stead of cold pressed oil seeds, seeds that are mechanically pretreated otherwise, e.g. dehulled (husked) seeds, can be used. Suitable vegetable materials, appropriate for cold pressing or other mechanically pretreatment are e.g. linseed, soy, rapeseed, canola, sunflower and the like.

In the event that the protein enriched fraction has a relatively high oil content and that it is desired to lower that oil content, the protein enriched fraction may be subjected to a solvent extraction process. Such solvent extraction processes are known in the art as discussed above. To remove oil, it is therefore advantageous to employ a solvent that is essentially hydrophobic, e.g. hexane.

The obtained protein enriched vegetable product has preferably a protein enrichment of at least 125 %, based on the total protein content of the vegetable seed material, as discussed above.

The protein enriched product may be used in food (e.g. bakery products and confectionery products), feed or pharmaceutical products.

If the particle specific surface area after milling process (a) is relatively high, the protein fraction comprises relatively small particles which makes efficient separation in step (b) more difficult, due to adhesion. To enhance the separation efficiency, it is found that it is advantageous to increase dispersive properties of the milled flour. This is preferably achieved by (1) adding some raw unmilled vegetable material to the vegetable flour obtained in the milling process (a), e.g. grits or (2) recycling a fraction of the coarse material obtained in step (b) to the vegetable flour obtained in the milling process (a). Preferably, the amount of raw unmilled vegetable material that is added or coarse material that is recycled is in the range of 10 to 35 wt.%, based on the total weight of vegetable flour obtained after milling process (a).

The remaining protein depleted fraction after said process is enriched in remaining other constituents such as fibres. It can be used as a fibre rich material for food, feed or pharmaceutical applications. Furthermore, the protein depleted fraction has improved flowing characteristics, enabling easier further processing. e.g. dosing. Also, said fiber rich material comprises high water binding capacities, relevant for various food applications.

### Examples

### Protein enrichment of Lupine Seeds

### Material and Method:

Australian lupine seeds with an alkaloid content lower than 200 ppm were partially toasted and dehulled. After dehulling the seeds were milled into so-called grits with a particle size between 0.25-1.0 mm. The grits was used as the feed material for the invented process. For the first stage of the invention two types of mills were used: an opposed air jet mill (AFG100) and a V50 ultra rotor (Septu, F).

The air jet mill was only fed with toasted lupine, whereas the ultra rotor was fed with toasted as well as untoasted lupine.

The flour from the jet mill was classified with an ATP50 classifier (Hosokawa Alpine, D) at a feed rate of 4 kg per hour and classifier speeds of 6.000, 7.000, 8.500 and 10.000 rpm, respectively. To ensure continuous production, 33% of the flour was replaced with lupine grits and mixed with the flour before it was classified.

Flour of the ultra rotor was classified in a spiral air classifier (MP137, Alpine) with vane angles between 10 and 40° at feed rate of ca. 20 kg/h.

To improve the separation efficiency at lower vane angles, three more experiments were conducted at a vane angle of 20° with toasted flour: (1) the feed rate was lowered to 13 kg/h; (2) 33% of the flour was replaced with lupine grits at a feed rate of 27 kg/h; (3) 33% of the flour was replaced with previously coarse fraction, obtained after previously performed air-classification.

Both the fines and the coarse fractions were weighed. Dry matter content (overnight 105°C), protein content (Kjeldahl Nx6.25) and the particle size distribution (Helos laser diffraction) were determined. With the latter Tromp curves were created to calculate the classifier cut point and determine the separation efficiency (sharpness of the separation) and the part of the flour that left the separator without being separated (τ).

### Results

Figure 1 shows the particle size distribution of the flour after milling. The main difference between those distributions and the distribution obtained after classic starch/protein dry separation is the lower specific surface area's which are here 1900, 2700 and 3000 (cm²/g) for ultra rotor milled untoasted lupine, toasted lupine milled with the ultra rotor and the jet mill, respectively. The higher moisture content of the untoasted lupine grits results in a lower specific surface area of the flour after milling compared to the toasted lupine.

For peas in general specific surface area's between 5000 and 10.000 (cm²/g) are found after the milling step. Due to the lupines high initial protein and fat content, dispersive properties and thereby separation efficiencies are negatively effected. Therefore, higher specific surface areas than 3500 (cm²/g) are not recommended for air classification of the flour.

With the jet mill and the ATP 50 classifier (Table 1) a protein content in the fines of 60% on dry weight could be reached, implying a protein enrichment of 150%. The grits mixed with the flour ensured an increasing protein content of the fines at higher classifier speeds. However, it could not avoid declining separation efficiencies (increase of τ). This resulted in only a small increase of protein content (3%) with a large decline of the total fines collected (from 31 to 10%).

For the lupine milled with the ultra rotor and classified with a spiral classifier the same trend was found (Table 2). However, due to the different separation mechanism and the fact that no grits was mixed with the flour before classifying, the effect of decreasing fine recovery was more apparent. Not only a large decrease in recovery of the fine fraction was found, but also the protein contents were decreasing at vane angles below 30°.

Table 3 shows the effect for different methods to overcome this problem. Mixing grits with the flour was efficient to increase the capacity of the classifier. However, it did not improve the protein content compared to the low capacity. Recycling a part of the coarse fraction obtained after previous air-classification is efficient to increase both capacity as well as the protein content.

**Table 1 Air classification of jet milled lupine with a ATP 50 classifier with different rotor speeds (protein content starting material 41 %d.m.).**

| Classifier speed (rpm) | Cut point (µm) | Fines (%d.m.) | Protein content fines (%d.m.) | Protein content coarse (%d.m.) |
|---|---|---|---|---|
| 6000 | 22 | 35 | 53 | 31 |
| 7000 | 17 | 31 | 57 | 32 |
| 8500 | 12 | 13 | 59 | 36 |
| 10000 | 12 | 10 | 60 | 36 |

**Table 2 Air classification of ultra rotor milled lupine with a MP 137 spiral classifier with different vane angles (protein content starting material: toasted 42%d.m, untoasted 40%d.m).**

| Feed | Vane angle (°) | Cut point (µm) | Fines (%d.m.) | Protein content fines (%d.m.) | Protein content coarse (%d.m.) |
|---|---|---|---|---|---|
| untoasted | 40 | 26 | 28 | 56 | 33 |
| | 30 | 20 | 21 | 58 | 35 |
| | 20 | 12 | 7 | 55 | 39 |
| | 10 | 12 | 7 | 54 | 39 |
| toasted | 40 | 19 | 28 | 57 | 35 |
| | 30 | 14 | 18 | 58 | 38 |
| | 20 | 10 | 8 | 53 | 41 |
| | 10 | 12 | 16 | 55 | 40 |

**Table 3 Air classification of ultra rotor milled toasted lupine with a MP 137 spiral classifier using different methods to improve the separation efficiency at a vane angle of 20° (protein content starting material 42%d.m.).**

| Feed | Cut point (µm) | Fines (%d.m.), (kg/h) | Protein content fines (%d.m.) | Protein content coarse (%d.m.) |
|---|---|---|---|---|
| 20 kg/h | 10 | 8, 1.7 | 53 | 41 |
| 13 kg/h | 10 | 9, 1.2 | 55 | 41 |
| 33% replaced with grits | 10 | 6, 1.7 | 56 | 41 |
| 33% replaced with coarse | 13 | 10, 2.5 | 59 | 38 |

## Claims

1. A method for the production of a protein enriched fraction from a vegetable material, wherein the vegetable material comprises a total fat content of 0.1 to 22.0 % by dry weight of the total vegetable material and a total starch content of 0.05 to 20 % by dry weight of the total vegetable material, said method comprising the steps of subjecting the vegetable material to (a) a milling process to obtain a vegetable flour and (b) subjecting the vegetable flour to a separation step to obtain the protein enriched fraction, wherein the vegetable material has a specific surface area of less than 3500 cm 2/g.

2. Method according to claim 1, wherein the vegetable material is a vegetable seed material and wherein the vegetable flour is a vegetable seed flour.

3. Method according to claim 1 or claim 2, wherein the separation step comprises an air classification process.

4. Method according to any one of the preceding claims, wherein the total protein content of the vegetable material is at least 20 % by dry weight of the total vegetable material.

5. Method according to any one of the preceding claims, wherein the total moisture content of the vegetable material is 0.5 to 16.0 %, based on the total weight of the vegetable material.

6. Method according to any one of the preceding claims, wherein the average particle size (d50) of the vegetable flour is at least 15 5 µm.

7. Method according to any one of the preceding claims, wherein the milling apparatus used in the milling process is a jet mill or an ultra rotor.

8. Method according to any one of the preceding claims, wherein the protein enrichment is at least 125 %, based on the total protein content of the vegetable seed material.

9. Method according to any one of the preceding claims, wherein the vegetable material comprises lupine seeds, cold pressed oil seeds or mechanically pretreated oil seeds.

10. Method according to any one of the preceding claims, wherein raw unmilled vegetable material is added to the flour after milling process (a).

11. Method according to any one of the preceding claims, wherein a fraction of coarse material obtained in step (b) is recycled to the vegetable flour obtained in the milling process (a).

12. Method according to any one of the preceding claims, wherein the protein enriched fraction is subjected to a solvent extraction process.

## Patentansprüche

1. Verfahren zur Herstellung eines proteinangereicherten Anteils aus einem pflanzlichen Material, wobei das pflanzliche Material einen Gesamtfettgehalt von 0,1 bis 22,0 % Trockengewicht des gesamten pflanzlichen Materials und einen Gesamtstärkegehalt von 0,05 bis 20 % Trockengewicht des gesamten pflanzlichen Materials umfasst, wobei das Verfahren die Schritte umfasst, dass das pflanzliche Material (a) einem Mahlprozess unterzogen wird, um ein pflanzliches Mehl zu erhalten, und (b) das pflanzliche Mehl einem Abtrennschritt unterzogen wird, um den proteinangereicherten Anteil zu erhalten, wobei das pflanzliche Material eine spezifische Oberfläche von weniger als 3500 cm²/g besitzt.

2. Verfahren nach Anspruch 1,
wobei das pflanzliche Material ein pflanzliches Saatmaterial ist, und wobei das pflanzliche Mehl ein pflanzliches Saatmehl ist.

3. Verfahren nach einem der Ansprüche 1 oder 2,
wobei der Abtrennschritt einen Luftklassierungsprozess umfasst.

4. Verfahren nach einem der vorhergehenden Ansprüche,
wobei der Gesamtproteingehalt des pflanzlichen Materials zumindest 20 % Trockengewicht des gesamten pflanzlichen Materials umfasst.

5. Verfahren nach einem der vorhergehenden Ansprüche, wobei der Gesamtfeuchtigkeitsgehalt des pflanzlichen Materials 0,5 bis 16,0 % auf Grundlage des Gesamtgewichts des pflanzlichen Materials beträgt.

6. Verfahren nach einem der vorhergehenden Ansprüche, wobei die durchschnittliche Partikelgröße (d50) des pflanzlichen Mehls zumindest 15 µm beträgt.

7. Verfahren nach einem der vorhergehenden Ansprüche, wobei die bei dem Mahlprozess verwendete Mahlvorrichtung eine Strahlmühle oder ein Ultrarotor ist.

8. Verfahren nach einem der vorhergehenden Ansprüche, wobei die Proteinanreicherung zumindest 125 % auf Grundlage des Gesamtproteingehalts des pflanzlichen Saatmaterials beträgt.

9. Verfahren nach einem der vorhergehenden Ansprüche, wobei das pflanzliche Material Lupinensaaten, kalt gepresste Ölsaaten oder mechanisch vorbehandelte Ölsaaten umfasst.

10. Verfahren nach einem der vorhergehenden Ansprüche, wobei das rohe ungemahlene pflanzliche Material dem Mehl nach dem Mahlprozess (a) hinzugefügt wird.

11. Verfahren nach einem der vorhergehenden Ansprüche, wobei ein Anteil des bei Schritt (b) erhaltenen groben Materials zu dem in dem Mahlprozess (a) erhaltenen pflanzlichen Mehl rückgeführt wird.

12. Verfahren nach einem der vorhergehenden Ansprüche, wobei der proteinangereicherte Anteil einem Lösemittelextraktionsprozess unterzogen wird.

## Revendications

1. Procédé de production d'une fraction enrichie en protéines à partir d'un matériau végétal, où le matériau végétal comprend une teneur totale en graisse de 0,1 à 22,0 % en poids sec du matériau végétal total et une teneur totale en amidon de 0,05 à 20 % en poids sec du matériau végétal total, ledit procédé comprenant les étapes consistant à soumettre le matériau végétal à (a) un procédé de broyage pour obtenir une farine végétale et (b) soumettre la farine végétale à une étape de séparation pour obtenir la fraction enrichie en protéines, où le matériau végétal présente une surface spécifique inférieure à 3500 cm²/g.

2. Procédé selon la revendication 1, dans lequel le matériau végétal est un matériau de graines végétales et dans lequel la farine végétale est une farine de graines végétales.

3. Procédé selon la revendication 1 ou la revendication 2, dans lequel l'étape de séparation comprend un procédé de classification à l'air.

4. Procédé selon l'une quelconque des revendications précédentes, dans lequel la teneur totale en protéines du matériau végétal est d'au moins 20 % en poids sec du matériau végétal total.

5. Procédé selon l'une quelconque des revendications précédentes, dans lequel la teneur totale en humidité du matériau végétal est de 0,5 à 16,0 %, en se basant sur le poids total du matériau végétal.

6. Procédé selon l'une quelconque des revendications précédentes, dans lequel la taille moyenne des particules (d50) de la farine végétale est d'au moins 15 µm.

7. Procédé selon l'une quelconque des revendications précédentes, dans lequel l'appareil de broyage utilisé dans le procédé de broyage est un broyeur à jet ou une ultrarotor.

8. Procédé selon l'une quelconque des revendications précédentes, dans lequel l'enrichissement en protéines est d'au moins 125 %, en se basant sur la teneur totale en protéines du matériau de graines végétales.

9. Procédé selon l'une quelconque des revendications précédentes, dans lequel le matériau végétal comprend des graines de lupin, des graines oléagineuses pressées à froid ou des graines oléagineuses prétraitées mécaniquement.

10. Procédé selon l'une quelconque des revendications précédentes, dans lequel du matériau végétal brut non broyé est ajouté à la farine après le procédé de broyage (a).

11. Procédé selon l'une quelconque des revendications précédentes, dans lequel une fraction de matériau grossier obtenu dans l'étape (b) est recyclée dans la farine végétale obtenue dans le procédé de broyage (a).

12. Procédé selon l'une quelconque des revendications précédentes, dans lequel la fraction enrichie en protéines est soumise à un procédé d'extraction par un solvant.
